Europäisches Patentamt

**European Patent Office**

**Office européen des brevets**

(19)

(11) Veröffentlichungsnummer: **0 009 815**
**A1**

(12) **EUROPÄISCHE PATENTANMELDUNG**

(21) Anmeldenummer: **79103798.9**

(22) Anmeldetag: **05.10.79**

(51) Int. Cl.³: **B 23 K 9/32**

(30) Priorität: **10.10.78 DE 2844079**

(43) Veröffentlichungstag der Anmeldung:
**16.04.80 Patentblatt 80/8**

(84) Benannte Vertragsstaaten:
**BE CH FR GB NL SE**

(71) Anmelder: **Eichhorn, Friedrich, Professor Dr.-Ing.**
**Fichthang 2**
**D-5100 Aachen(DE)**

(72) Erfinder: **Hirsch, Peter, Dr.**
**Schlossweiherstrasse 3-5**
**D-5100 Aachen-Laurensberg(DE)**

(72) Erfinder: **Wübbels, Bernhard**
**Gemenwirthe 36**
**D-4280 Borken 1(DE)**

(72) Erfinder: **Langenbahn, Hans-Willi**
**Roermonder Strasse 139**
**D-5100 Aachen(DE)**

(72) Erfinder: **Schäfer, Rolf**
**Am Dor-ach 8**
**D-5100 Aachen(DE)**

(74) Vertreter: **Kraus, Walter, Dr. et al,**
**Patentanwälte Dres. Kraus & Weisert Irmgardstrasse 15**
**D-8000 München 71(DE)**

(54) **Verfahren und Vorrichtung zum Elektro-Gas-Schweissen von Blechen.**

(57) Die Erfindung betrifft ein Verfahren zum Elektro-Gas-Schweißen von Blechen, bei dem stromloses Zusatzmaterial in Metallpulverform auf die Schweißdrahtelektrode geblasen wird.

Ferner betrifft die Erfindung eine Vorrichtung zur Durchführung dieses Verfahrens.

./...

F I G .1

Verfahren und Vorrichtung zum Elektro-
Gas-Schweißen von Blechen

Das Elektro-Gas-Schweißen ist schon seit längerer Zeit
als mechanisiertes Lichtbogenschweißverfahren unter
Schutzgas zum Verschweißen von Blechen aus Metall insbesondere aus Stahl in senkrechter Position bekannt.

Dieses Verfahren hat den Nachteil, daß bei dem gebräuchlichen Elektro-Gas-Schweißen nur mit relativ
geringen Schweißgeschwindigkeiten gearbeitet werden
kann. Dies führt wie bekannt wegen des geringen Kristallisationsgeschwindigkeit zu einem stark orientierten Gefüge im Schweißgut und infolge langer Einwirkzeit über
1000 °C insbesondere bei Stahl zu einer ausgeprägten Grobkornzone in der nahtnahen Wärmeeinflußzone des Grundwerkstoffes mit niedrigen Festigkeits- und Zähigkeitseigenschaften.

Es sind Verfahren und Vorrichtungen zum Elektro-Gas-
Schweißen bekannt, bei denen die Schweißgeschwindigkeit
höher ist als bei dem gebräuchlichen Elektro-Gas-Schweißen.
Zum Beispiel wird die Schweißgeschwindigkeit erhöht, indem
durch eine Erhöhung der Stromstärke die Abschmelzleistung
überproportional ansteigt. Der Nachteil hierbei ist jedoch, daß durch die starke Überhitzung des Schmelzbades
die Zähigkeitswerte im Schweißgut absinken.

Auch ist bekannt, daß durch die Zufuhr von stromlosem
Kaltdraht, der durch den Lichtbogen bzw. durch das flüssige Schmelzbad aufgeschmolzen wird, zwar ebenfalls die Abschmelzleistung und damit die Schweißgeschwindigkeit zu
steigern. Jedoch das ungünstige Volumen/Oberflächen-Verhältnis des Kaltdrahtes läßt nur geringe Vorschubgeschwindigkeiten zu.

Die Erfindung hat es sich zur Aufgabe gestellt, das Gefüge der Schweißverbindung zu verbessern. Zu diesem Zwecke wird erfindungsgemäß vorgeschlagen, beim Elektro-Gas-Schweißen stromloses Zusatzmaterial in Metallpulverform mittels eines Gases durch ein Zuführungsrohr auf die Schweißelektrode zu blasen. Durch diese erfinderische Maßnahme wird erreicht, daß einmal die Badtemperatur erniedrigt sowie die Schweißgutmenge und damit die Schweißgeschwindigkeit erhöht wird. Zur Durchführung dieses Verfahrens wird weiter erfindungsgemäß vorgeschlagen, das stromlose Zusatzmaterial in Pulverform durch ein elektromagnetisch abgeschirmtes Zuführungsrohr zu blasen, das in dem feldarmen Raum einer aus lamellierten Trafoblechen um den als Schweißdrahtzuführung dienenden Kupferrüssel gebildeten Abschirmung angeordnet ist.

Das erfindungsgemäß auf den Draht geblasene Metallpulver mit im Verhältnis zum Volumen sehr großen Oberfläche wird zusammen mit dem Schweißdraht abgeschmolzen, wodurch einmal die Temperatur des Schmelzbades erniedrigt und zum anderen die Schweißgutmenge erhöht wird wie Versuche gezeigt haben .Damit wird eine Steigerung der Schweißgeschwindigkeit und eine Verbesserung des Gefüges bzw. der Zähigkeit der Schweißverbindung insbesondere bei Stahl erreicht.

Ein Ausführungsbeispiel ist in der Zeichnung schematisch dargestellt und wird in folgendem beschrieben:  Es zeigen

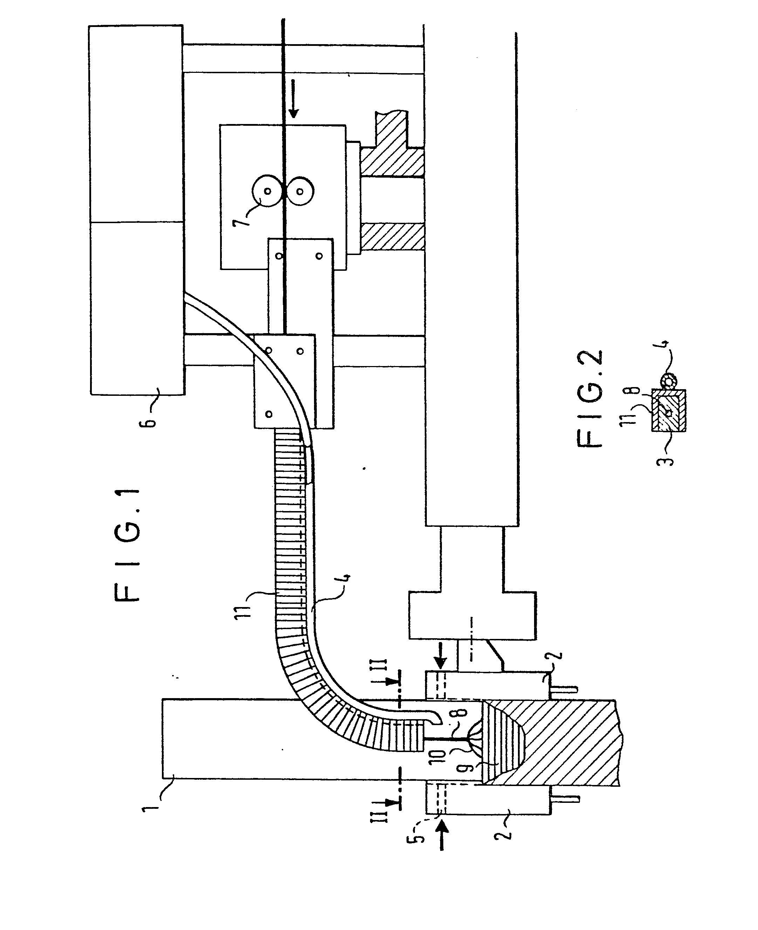

Fig.1: die schematische Gesamtanordnung einer Vorrichtung zum Elektro-Gas-Schweißen in Seitenansicht

Fig.2: einen Schnitt II - II  durch den Kupferrüssel mit Schweißdraht, Abschirmbleche und Metallpulverzuführungsrohr.

0009815

Die Vorrichtung für die Elektro-Gas-Scheißung besteht aus:

- zwei Kupferbacken 2 mit Schutzgasbohrungen 5 zwischen denen die zu verschweißenden Bleche 1 gleiten und die gleichzeitig zur Sicherung des Schmelzbades 9 dienen. Zwischen dem Schweißdraht 8 .und dem Schmelzbad 9 ist der Lichtbogen 1o schematisch dargestellt.

- Das Metallpulverzuführungsrohr 4 auf dem Rücken U-förmiger Trafobleche, die den Kupferrüssel 3 ganz oder teilweise umgeben, befestigt und mündet kurz unterhalb des Rüssel endes.

- Der Vorschub des Schweißdrahtes 8 erfolgt mittels der Drahtvorschubeinrichtung 7. Das Metallpulver wird mit Hilfe einer Blas- und Fördereinrichtung 6 in das Zuführungsrohr 4 eingeblasen.

0009815

PATENTANSPRÜCHE

1. Verfahren zum Elektro-Gas-Schweißen von Blechen

   d a d u r c h   g e k e n n z e i c h n e t ,

   daß stromloses Zusatzmaterial in Metallpulverform auf die Schweißdrahtelektrode geblasen wird.


2. Vorrichtung zum Elektro-Gas-Schweißen von Blechen
   nach Anspruch 1

   d a d u r c h   g e k e n n z e i c h n e t ,

   daß stromloses Zusatzmaterial in Metallpulverform mittels eines Gases durch ein elektromagnetisch abgeschirmtes Zuführungsrohr geblasen wird.

FIG.1

FIG.2

Europäisches
Patentamt

# EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | B 23 K 9/32 |
| | FR - A - 2 077 732 (ARCOS) <br> * Seite 1 * | 1,2 | |
| | -- | | |
| | DE - A - 2 238 321 (KRUPP) <br> * Seite 11 * | 1 | |
| | -- | | |
| | GB - A - 771 214 (UNION CARBIDE) <br> * Seite 1, Zeilen 20-30 * | | RECHERCHIERTE SACHGEBIETE (Int. Cl. 3) |
| | -- | | B 23 K 9/32 <br> 9/18 <br> 25/00 |
| | FR - A - 2 143 755 (GUTEHOFF-NUNGSHUTTE) <br> * Seite 4, Zeilen 1-11 * <br> & DE - A - 2 132 143 <br> & NL - A - 72 08484 <br> & US - A - 3 883 711 | 1 | |
| | -- | | |
| EP | EP - A - 0 001 771 (EICHHORN) <br> * Zusammenfassung * | 1,2 | |
| | -- | | KATEGORIE DER GENANNTEN DOKUMENTE |
| A | DE - A - 2 412 273 (KAHLE) <br> * Seite 10 * | 1 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| | ---- | | |
| | | | &: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 14-01-1980 | HOORNAERT |

EPA form 1503.1 06.78